# EUROPEAN PATENT APPLICATION

(11) **EP 2 383 911 A1**
(43) Date of publication of application: **02.11.2011**
(21) Application number: 10305440.9
(22) Date of filing: 27.04.2010
(51) Int. Cl.: H04B 10/155, H04B 10/08, H04J 14/02

(54) **Method of operating an optical data transmission system, optical data transmission system, optical transmitter, optical receiver, and administrative unit**

(71) Applicant: Alcatel Lucent, 75008 Paris (FR)
(72) Inventor: Krimmel, Heinz-Georg, 70825, Korntal-Muenchingen (DE)
(74) Representative: Brose, Gerhard

(57) **Abstract**

The invention relates to a method of operating an optical data transmission system using a specified operating wavelength, with a light emitting element, the working wavelength of which is temperature-dependent, and where the specified operating wavelength is obtained by influencing the temperature of the light emitting element and thus the working wavelength by means of energy effort, wherein in consequence of a temperature change of the light emitting element the specification of the operating wavelength is modified such that the newly specified operating wavelength is reached with less energy effort, to an optical data transmission system, to an optical transmitter, and to an administrative unit.

## Description

### Field of the Invention

The invention relates to a method of operating an optical data transmission system using a specified operating wavelength, with a light emitting element, the working wavelength of which is temperature-dependent, and where the specified operating wavelength is obtained by influencing the temperature of the light emitting element and thus the working wavelength by means of energy effort.

The invention further relates to an optical data transmission system with an optical transmitter, an optical receiver, and an administrative unit for specifying an operating wavelength for the data transmission between optical transmitter and optical receiver.

The invention further relates to an optical transmitter for an optical data transmission system with an optical transmitter, an optical receiver, and an administrative unit for specifying an operating wavelength for the data transmission between optical transmitter and optical receiver.

The invention further relates to an optical receiver for an optical data transmission system with an optical transmitter, an optical receiver, and an administrative unit for specifying an operating wavelength for the data transmission between optical transmitter and optical receiver.

The invention further relates to an administrative unit for an optical data transmission system with an optical transmitter, an optical receiver, and an administrative unit for specifying an operating wavelength for the data transmission between optical transmitter and optical receiver.

### Background

Optical data transmission systems typically use wavelength division multiplex techniques (wavelength division multiplex = WDM), where a multiple of data streams are transmitted independently at the same time over one and the same optical transmission path, typically an optical fiber. To this end the useful wavelength range is split into a multiple of optical channels. To each data stream either of those channels is assigned. Light emitting elements like lasers then are to be centered within such assigned channel. Adjusting the wavelength of a laser, including the centering within a channel, practically can only be done by adapting the temperature. Mostly this is being done using thermo-electric cooling devices, but could also be done by heating the laser or by a combination of both.

The energy requirement for adjusting to and holding an assigned wavelength is considerable compared to the overall operating energy. In times of green technology this is a major drawback.

### Summary

According to the invention this problem is solved by a method of operating an optical data transmission system using a specified operating wavelength, with a light emitting element, the working wavelength of which is temperature-dependent, and where the specified operating wavelength is obtained by influencing the temperature of the light emitting element and thus the working wavelength- by means of energy effort, wherein in consequence of a temperature change of the light emitting element the specification of the operating wavelength is modified such that the newly specified operating wavelength is reached with less energy effort.

This problem further is solved by an optical data transmission system with an optical transmitter, an optical receiver and an administrative unit for specifying an operating wavelength for the data transmission between optical transmitter and optical receiver, wherein a sensor is included for determining a value representing working conditions leading to an actual working wavelength, wherein reporting means are foreseen to report the determined value to the administrative unit, and wherein the administrative unit is built such that, based on the reported value, it modifies the specification of the operating wavelength such that this operating wavelength is adjustable with less energy effort.

This problem still further is solved by an optical transmitter for an optical data transmission system with an optical transmitter, an optical receiver and an administrative unit for specifying an operating wavelength for the data transmission between optical transmitter and optical receiver, where the optical transmitter includes a sensor for determining a value representing working conditions leading to an actual working wavelength, and wherein the optical transmitter is built such that it is capable to report the determined value to the administrative unit.

This problem still further is solved by an optical receiver for an optical data transmission system with an optical transmitter, an optical receiver and an administrative unit for specifying an operating wavelength for the data transmission between optical transmitter and optical receiver, wherein the optical receiver includes a sensor for determining a value representing working conditions leading to an actual working wavelength, and wherein the optical receiver is built such that it is capable to report the determined value to the administrative unit.

This problem still further is solved by an administrative unit for an optical data transmission system with an optical transmitter, an optical receiver and an administrative unit for specifying an operating wavelength for the data transmission between optical transmitter and optical receiver, where a sensor is included for determining a value representing working conditions leading to an actual working wavelength, where reporting means are foreseen to report the determined value to the administrative unit, and wherein the administrative unit is built such that, based on the reported value, it modifies the specification of the operating wavelength such that this operating wavelength is adjustable with less energy effort.

The basic idea behind is to adapt the selection of parameters rather than to spend quantities of energy to keep arbitrarily chosen parameters.

Further embodiments of the invention are to be found in the subclaims and in the following description.

### Brief Description of the Figures

In the following the invention will be described with reference to the accompanying drawings, in which:
- Figure 1: shows the channel allocation in an optical data transmission system according to the invention, when operated according to a method according to the invention.
- Figure 2: shows a typical optical data transmission system that can be built as optical data transmission system according to the invention.
- Figure 3: shows the optical transmit part of an optical network termination device as an example of an optical transmitter according to the invention.
- Figure 4: shows the optical receive part of an optical line termination device as an example of an optical receiver according to the invention,
- Figure 5: shows an administrative unit according to the invention for an optical data transmission system.

### Description of the Embodiments

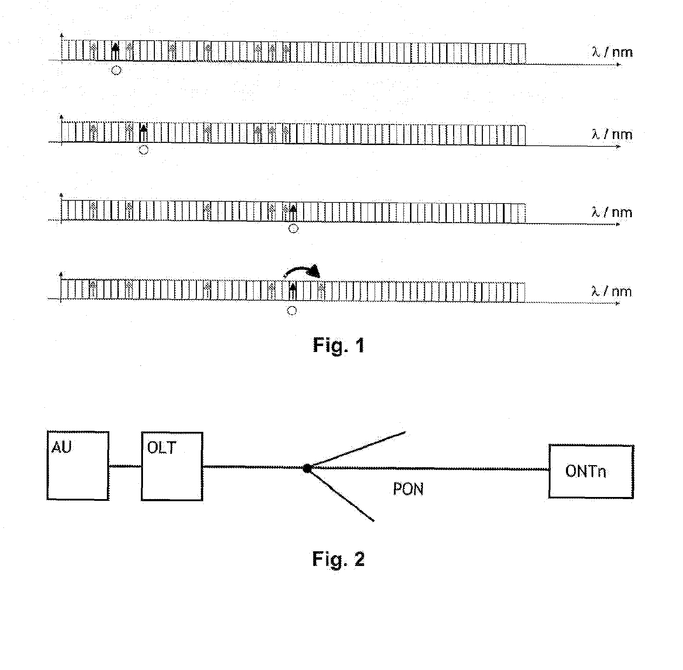

Based on figure 1 the idea behind the invention is described as follows:
The useful wavelength range in an optical fiber typically is divided in a number of channels, often with equal channel band width and directly adjacent (apart from guard bands) to one another. The channel band width lies in the range of 20 nm with CWDM (Coarse Wavelength Division Multiplex) or .4 to 1.6 nm with DWDM (Dense Wavelength Division Multiplex).
In access networks, a typical, but by far not the only example of such optical data transmission systems, to each subscriber, when in operation, one such channel is assigned for transmitting his (upstream) data towards the core network. To this end in each subscriber's equipment an optical light source, typical a laser diode, is installed, that is to be operated in the center of either of these channels.

Especially depending on the kind of branching point, namely using power splitters or wavelength filters, the transmission medium is either transparent to entire wavelength ranges or typically has periodic pass bands.

The use of a common medium for more than one optical transmission implies the use of some kind of administration. Typically an administration unit assigns transmission channels to these optical transmissions. As the working wavelength of such light emitting element is temperature-dependent, the assigned or specified channel is obtained by influencing the temperature of the light emitting element and thus the working wavelength and transmission channel by means of regulating the temperature. That means that continuously energy is to be spent for holding the working wavelength.

Here the invention proposes to specify the channel such that it can be reached with minimum energy input rather than to arbitrarily specify a channel to be used. And when the temperature changes, a suitable occasion (e.g. a transmission pause) should be used to adapt the specification of the channel.

The first line of figure 1 shows the channel allocation at a first moment. Here eight channels are occupied by the transmissions of eight subscribers. These channels are specified by an instance administering at least the optical transmission system considered here. Here we call this instance an administrative unit.

As the subscribers considered here are independent from one another, their equipment also will be independent one from the other. It is therefor assumed that in most of these cases the wavelengths reached without temperature regulation of the light sources are different from one another. A channel allocation next to these "natural" wavelengths thus can be reached with minor energy effort or energy input.

Though the advantages of this invention are more effective, when the light sources are independent from one another, as here in the upstream direction of a passive optical network (PON), the use nevertheless may be advantageous also in other applications, like in the downstream direction of such network. In the following primarily the use in the upstream direction of such network is described.

One of these channels is drawn up in deep black and marked with a circle below. The behavior of this channel is now contemplated. We assume that this channel now is started to be used for transmission. The others are drawn up in gray color. They are assumed to be in a more stable condition.

The second line of figure 1 shows the channel allocation at a moment a short time later.

As a consequence of its having been taken in operation, the optical source, typically a laser, has warmed up, reported this to the administrative unit, and been specified and assigned a channel with a slightly higher wavelength.

The third line of figure 1 shows the channel allocation at a time when the temperature has become almost stable and this connection is assigned a rather higher wavelength. Though two of the channels used at the beginning meanwhile have been released, around the newly shifted channel the channel allocation is somewhat dense, giving less freedom to the administrative unit to react on further changes of temperature.

Therefor, as shown in the forth line of figure 1, one of the other connections is provided a jump to a channel somewhat distant from the others. Here for example a distinction can be made between equipment powered by a mains supply and equipment powered by battery or solar energy.

As in the example shown typically there is not only one single data transmission using a given common transmission medium, but typically there is more than one. In specifying the wavelengths of all these optical transmissions advantageously the overall energy effort is being considered. As already indicated, also the use of energy sources of different kind (mains supply, battery, solar energy) can be considered.

The optical data transmission system shown in figure 2 includes an administrative unit AU, an optical line termination device OLT, a passive optical network PON, and a multiple of optical network termination devices, where one of which, namely ONTn, is shown.

As administrative unit AU we denote whatever entity in the network that is to receive requests for assigning resources like transmission channels and to grant such requested resources including the specification of the granted resources, especially the specification of the wavelength to be used. For a passive optical network PON, the example used here, such administrative unit is known as media access controller and is part of e.g. the optical line termination unit in shared media passive optical networks, located in a central office.

The optical line termination device OLT is the network-sided termination of any optical access network, like a passive optical network PON. It includes optical transmitters and optical receivers for optically communicating with the network termination devices like ONTn. As all optical transmitters in this device are next to one another, their "natural" (unheated and uncooled) temperatures are coarsely the same. In addition energy for heating or cooling light sources might be more readily available in a central network element than in a remote one. Nevertheless, of course, these principles might be applied anyway, e.g. by selecting devises with a production determined offset. Apart from this the receivers in this device might be adapted to recognize wavelength drifts in the received optical signals and to report them to the administrative unit AU to eventually derive therefrom a tendency towards an other optical channel.

A passive optical network PON is an optical distribution network in an access network of a telecommunication's network. For practical reasons branching points mostly are concentrated at only few locations. But principally each optical network termination device, like ONTn, might be tied at a different point. In contrast to what the name says, such network may include also active elements like amplifiers or regenerators.

The optical network termination device ONTn is the subscriber-sided termination of any optical access network, like a passive optical network PON. It includes optical transmitters and optical receivers for optically communicating with the optical line termination device OLT. It is mainly this device (and the other like devices) that is the aim of the subject invention.

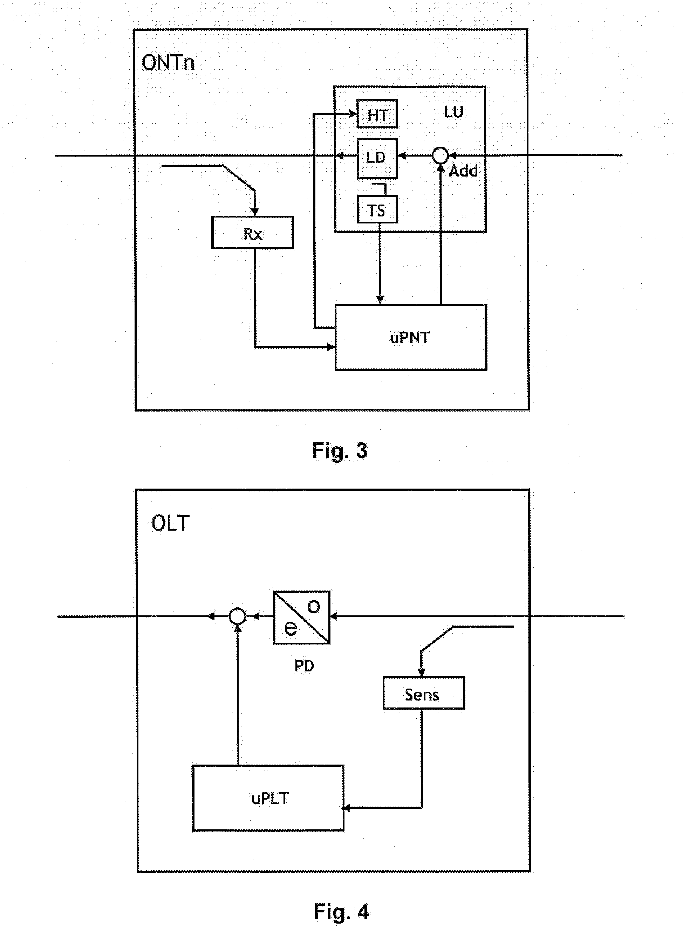

An example of such optical network termination device ONTn is shown in figure 3. It includes a laser unit LU, a network termination sided control element uPNT, and an optical receiver Rx.

It's not unusual that such laser unit LU includes the laser diode, a temperature influencing element, here a heater HT, and a temperature sensor TS. In addition here it contains an adder Add to insert reporting data from the control element uPNT into the uplink data stream. By suitably modifying the temperature of the laser diode the operating wavelength thereof can be adjusted to a wanted value. A similar effect can be achieved by changing the laser current. Small, but fast changes can be reached therewith.

The control element uPNT includes look-up tables containing the relationship between laser temperature and operating wavelength and thus can regulate this temperature via the heater HT. At least one parameter characterizing the actual situation is reported back to the administrative unit AU via the adder Add. Such parameter may include the temperature sensed by the temperature sensor TS, a surrounding temperature or the energy imposed to reach the actual wavelength.

The operating wavelength to be used is specified by the administrative unit AU via the built-in receiver Rx.

Mostly anyway data paths between the administrative unit AU and an optical network termination device ONTn exist; adder Add and receiver Rx then may not be necessary.

As the temperature of a laser diode and the operating wavelength achieved under such circumstances is a consequence of natural law, according to the invention an improvement can even be reached without costly reporting mechanisms. The mere use of longer wavelengths under higher temperatures surrounding the administrative unit or in the region served, or in a longer lasting connection might improve the energy balance of the system.

Another possibility is shown in figure 4. In parallel to opto-electronically converting the incoming data stream in a photo diode PD of an optical line termination device OLT a sensor Sens is sensing the actual incoming wavelength, a deviation thereof from a reference value, or a drift thereof. Such sensed parameter is given to a line termination sided control element uPLT that sends respective reports to the administrative unit AU by insertion into the output data stream.

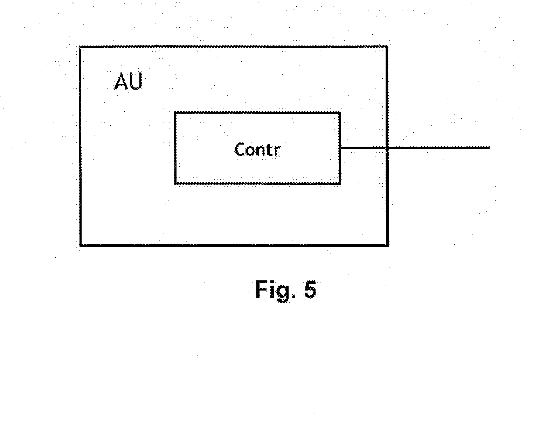

The administrative unite AU, as shown in figure 5, includes whatever kind of control device Contr, mostly a computing device for assigning channels. Such device anyway is necessary and present. It can easily be complemented such that it also obeys the principle of the invention.

## Claims

1. Method of operating an optical data transmission system (Fig. 2) using a specified operating wavelength, with a light emitting element (LD), the working wavelength of which is temperature-dependent, and where the specified operating wavelength is obtained by influencing (HT) the temperature of the light emitting element (LD) and thus the working wavelength by means of energy effort, wherein in consequence of a temperature change of the light emitting element (LD) the specification of the operating wavelength is modified (AU) such that the newly specified operating wavelength is reached with less energy effort.

2. Optical data transmission system (Fig. 2) with an optical transmitter (ONTn, OLT), an optical receiver (OLT, ONTn) and an administrative unit (AU) for specifying an operating wavelength for the data transmission between optical transmitter (ONTn, OLT) and optical receiver (OLT, ONTn), wherein a sensor (TS) is included for determining a value representing working conditions leading to an actual working wavelength, wherein reporting means (uPNT, Add) are foreseen to report the determined value to the administrative unit (AU), and wherein the administrative unit (AU) is built such that, based on the reported value, it modifies the specification of the operating wavelength such that this operating wavelength is adjustable with less energy effort.

3. Optical transmitter (ONTn, OLT) for an optical data transmission system (Fig. 2) with an optical transmitter (ONTn, OLT), an optical receiver (OLT, ONTn) and an administrative unit (AU) for specifying an operating wavelength for the data transmission between optical transmitter (ONTn, OLT) and optical receiver (OLT, ONTn), where the optical transmitter (ONTn, OLT) includes a sensor (TS) for determining a value representing working conditions leading to an actual working wavelength, and wherein the optical transmitter (ONTn, OLT) is built such that it is capable to report the determined value to the administrative unit (AU).

4. Optical receiver (OLT, ONTn) for an optical data transmission system (Fig. 2) with an optical transmitter (ONTn, OLT), an optical receiver (OLT, ONTn) and an administrative unit (AU) for specifying an operating wavelength for the data transmission between optical transmitter (ONTn, OLT) and optical receiver (OLT, ONTn), wherein the optical receiver (OLT, ONTn) includes a sensor (Sens) for determining a value representing working conditions of the optical transmitter (ONTn, OLT), leading to an actual working wavelength, and wherein the optical receiver (OLT, ONTn) is built such that it is capable to report (uPLT) the determined value to the administrative unit.

5. Administrative unit (AU) for an optical data transmission system (Fig. 2) with an optical transmitter (ONTn, OLT), an optical receiver (OLT, ONTn) and an administrative unit (AU) for specifying an operating wavelength for the data transmission between optical transmitter (ONTn, OLT) and optical receiver (OLT, ONTn), wherein a sensor (TS, Sens) is included for determining a value representing working conditions leading to an actual working wavelength, wherein reporting means (uPNT, Add; uPLT) are foreseen to report the determined value to the administrative unit (AU), wherein the administrative unit (AU) is built such that, based on the reported value, it modifies the specification of the operating wavelength such that this operating wavelength is adjustable with less energy effort.

6. Administrative unit (AU) according to claim 5, **characterized in, that** when the administrative unit (AU) is foreseen to specify the operating wavelengths of more than one optical transmitter (ONTn, OLT) using a common transmission medium the administrative unit (AU) is built such that, in specifying the operating wavelengths of the set of such optical transmitters (ONTn, OLT) the overall energy effort to adjust all operating wavelengths is considered.
